Europäisches Patentamt

European Patent Office

Office européen des brevets

(19)

(11) Publication number: **0 504 860 A2**

# EUROPEAN PATENT APPLICATION

(21) Application number: **92104717.1**

(22) Date of filing: **18.03.92**

(51) Int. Cl.⁵: **G06F  15/16**

(30) Priority: **19.03.91 JP 80967/91**

(43) Date of publication of application:
**23.09.92 Bulletin  92/39**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Iwasaki, Masaaki**
**c/o Fujitsu Limited, 1015, Kamikodanaka**
**Nakahara-ku, Kawasaki-shi, Kanagawa,**
**211(JP)**

(74) Representative: **Schmidt-Evers, Jürgen,**
**Dipl.-Ing. et al**
**Patentanwälte Mitscherlich & Partner,**
**Steinsdorfstrasse 10**
**W-8000 München 22(DE)**

(54) **Method of loading down program in remote communication devices via spare lines and communication network using the method.**

(57) A communication network includes a network management device (1), and a plurality of communication devices (2, 3) connected, via master and spare lines (L1, L2), to each other so that a network composed of the communication devices is formed. Information is transferred on the master lines in a normal state in which no error has been occurred in the communication devices. The network management device is connected to at least one of the communication devices. The network management device includes a first part (1-1, 1-2, 1-3) for loading down a predetermined program used in the communication devices in any one of the communication devices. Each of the communication devices includes a second part (2-1, 3-1) for storing the predetermined program, and a third prt (2-2, 3-2, 2-3, 3-3) for reading out the predetermined program from the second part and transfers the predetermined program to at least one of the communication devices via at least one of the spare lines.

*FIG.IA*

EP 0 504 860 A2

Rank Xerox (UK) Business Services

## BACKGROUND OF THE INVENTION

### (1) Field of the Invention

The present invention generally concerned with a communication system having a network management device and a plurality of communication devices remote from the network management device. More specifically, the present invention is concerned with a down-loading of software, such as a supervisory control program, in remote communication devices via spare(protection) lines.

### (2) Description of the Prior Art

Recently, various communication services have been available. Examples of these communication services are push-button type services, ISDN (Integrated Services Digital Network) services, and image data transmission services. Under these circumstances, it has been required to easily install a suitable program in channel interfaces of the communication devices.

For the above requirement, it is possible to exchange hardware of the communication devices with new ones in which a suitable program has been implemented. However, the exchange of hardware is very expensive. From this point of view, it is required to cope with the above requirement by changing only software.

If software, such as a supervisory control program, has been installed in a ROM (Read Only Memory) of each communication devices, the ROM is replaced with a new ROM into which a new program presenting a new service has been written. If software has been installed in a flexible storage disk, such as a floppy disk, an operator goes to each remote communication device and replace the floppy disk with a new one. However, the above software updating procedures cost a great deal and need a long time.

It may be possible to load down a new program in each communication device from a network management device. In order to keep the communication services active, the new program will be transferred to each communication device by using spare bits other than bits used for data of the communication services. However, in actuality, a small number of spare bits are provided in order to efficiently use the data transmission capacity of the line. Hence, it takes a long time to load down the new program in each communication device.

## SUMMARY OF THE INVENTION

It is a general object of the present invention to provide a communication system in which the above disadvantages are eliminated.

A more specific object of the present invention is to provide a communication system capable of shortly, automatically, and efficiently loading down software in each communication device from a network management device.

The above objects of the present invention are achieved by a communication network comprising: a network management device; and a plurality of communication devices connected, via master lines and spare lines, to each other so that a network composed of the communication devices is formed, information being transferred on the master lines in a normal state, the network management device being connected to at least one of the communication devices. The network management device comprises first means for loading down a predetermined program used in the communication devices in any one of the communication devices. Each of the communication devices comprises: second means for storing the predetermined program; and third means for reading out the predetermined program from the second means and for transferring the predetermined program to at least one of the communication devices via at least one of the spare lines.

The above-mentioned objects of the present ivnention are also acheieved by the following method. This method of loading down a predetermined program stored in a network management device in communication devices which are connected via master and spare lines so that a network composed of the communication devices is formed, information being transferred on the master lines in a normal state in which no error has occurred in the communication devices, the method comprising the steps of: (a) loading the predetermined program stored in the network management device in a first one of the communication devices; (b) storing the predetermined program in a memory provided in the first one of the communication devices; (c) reading out the predetermined program from the memory; and (d) transferring the predetermined program to a second one of the communication devices via one of the spare lines.

## BRIEF DESCRIPTION OF THE DRAWINGS

Other objects, features and advantages of the present invention will become apparent from the following detailed description when read in conjunction with the accompanying drawings, in which:

Fig.1A is a block diagram showing an outline of the present invention;

Fig.1B is a diagram showing the contents of a program memory of each communication device shown in Fig.1A;

Fig.2 is a block diagram of an embodiment of the present invention;

Fig.3 is a block diagram of a communication device shown in Fig.2;
Fig.4 is a block diagram of a switching controller, a communication adapter and a switch shown in Fig.3;
Fig.5 is a block diagram showing a connection between a network management device and communication devices;
Fig.6 is a flowchart showing how a new supervisory program is loaded in each communication device; and Fig.7 is a sequence diagram showing, in more detail, the procedure shown in Fig.6.

## DESCRIPTION OF THE PREFERRED EMBODIMENTS

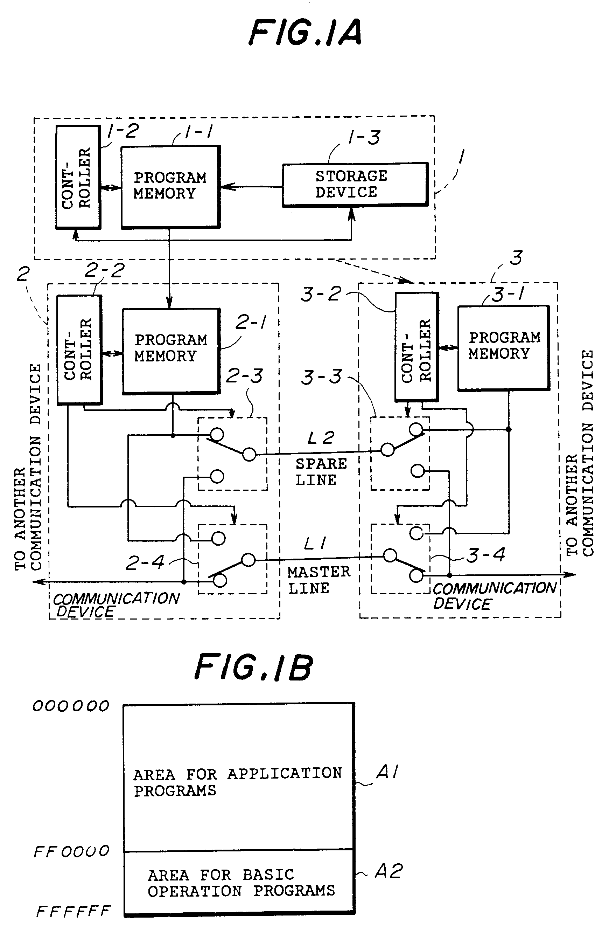

Fig.1A shows an outline of the communication system of the present invention. The communication system shown in Fig.1 includes a network management device 1, and a plurality of communication devices 2 and 3. For the sake of simplicity, only two communication devices are depicted in Fig.1. These communication devices form a communication network. The network management device 1 is composed of a program memory 1-1, a controller 1-2 and a storage device 1-3. A program which is to be replaced with a program stored in the communication devices is stored in the storage device 1-3. The communication device 2 is composed of a program memory 2-1, a controller 2-2, and two switches 2-3 and 2-4. Similarly, the communication device 3 is composed of a program memory 3-1, a controller 3-2, and two switches 3-3 and 3-4. The switches 2-4 and 3-4 are connected to each other via a master line L1. The switches 2-3 and 2-4 are connected to each other via a slave (spare) line L2.

It will be now assumed that a new supervisory control program stored in the storage device 1-3 of the network management device 1 is loaded in the program memories 2-1 and 3-1. The supervisory control program supervises predetermined conditions of each of the communication devices 2 and 3. For example, the supervisory control program periodically determines whether or not a failure has occurred in the master line L1. When it is determined that a failure has occurred in the master line L1, the spare line L2 is switched to the master line under the control of the supervisory control program. Alternatively, it is possible to executes a loop-back procedure by which the mater line is folded back at each of the communication devices 2 and 3.

The supervisory control program is read out from the storage device under the control of the controller 1-2, and written into the program memory 1-1. Then, the supervisory control program is read out from the program memory 1-1 and loaded down in the program memory 2-1 of the communication device 2 under the control of the controller 1-2. Thereafter, the controller 1-2 sends to the controller 2-2 a command which requests the communication device 2 to load the supervisory control program in the communication device 3. In response to the command, the controller 2-2 informs the controller 3-2 of a request to prepare for receipt of data. Then, the switch 2-3 makes a connection between the program memory 2-3 and the spare line L2 under the control of the controller 2-2. Similarly, the switch 3-3 makes a connection between the program memory 3-3 and the spare line 2. Then the controller 2-2 reads out the supervisory control program from the program memory 2-1 and transfers it to the program memory 3-1 via the spare line L2. Then, the supervisory control program is written into the program memory 3-1. A procedure for transferring data from the communication device 2 to the communication device 3 is executed by programs which are stored in the program memories 2-1 and 3-1 beforehand.

As shown in Fig.1B, a storage area of each of the program memories 2-1 and 3-1 is divided into a program area A1 for applications and a program area A2 for operation systems necessary to execute, for example, a data read/write operation. The transfer procedure about the new supervisory control program is executed in the programs stored in the program area A2. Further, the supervisory control program stored in the program memory 2-1 is loaded, via a spare line, in a communication device (not shown) connected to the communication device 2 in the same manner as described above. Similarly, the supervisory control program stored in the program memory 3-1 is loaded, via a spare line, in a communication device (not shown) connected to the communication device 3 in the same manner as described above. It will be noted that the down-loading process can be efficiently executed at a high speed since the supervisory program is loaded in each communication device via the spare lines connected between the communication devices. Of course, it is possible for the network management device 1 to load the supervisory control program in the communication device 3, as shown by a broken line. Although not shown for the sake of simplicity, a network, such as a packet network, can be interposed between the network management device 1 and each communication device.

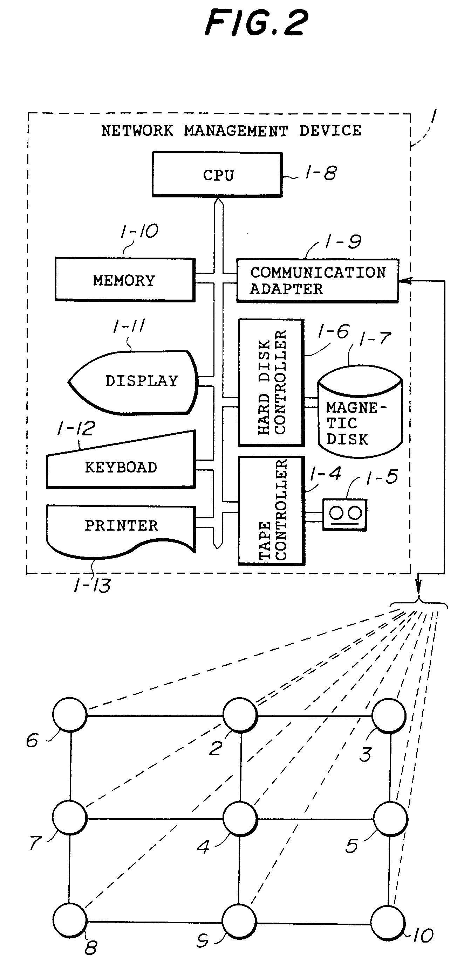

A description will now be given, with reference to Figs.2 through 4, of an embodiment of the present invention. In Figs.2 through 4, parts which are the same as those shown in Figs.1A and 1B are given the same reference numerals. The network management device 1 is composed of a magnetic tale controller 1-4, a magnetic tape unit 1-5, a hard disk controller 1-6, a magnetic disk unit 1-7, a CPU (Central Processing Unit) 1-8, a communication adapter 1-9, a memory 1-10, a display device 1-11, a keyboard 1-12, and a printer 1-13. The above structural elements other than the magnetic tape unit 1-5 and the magnetic disk 1-7 are connected to one another via a bus. The magnetic tape controller 1-4 reads out, from the magnetic tape unit 1-5, a program which is to be loaded in each communication device. The readout program is once stored in the memory 1-10 and then transferred, via the communication adapter 1-9, to any one of the communication devices 2 - 10 via a network (not shown for the sake of simplicity). It will be noted that the tape controller 1-4 is a part of the controller 1-2 shown in Fig.1A, and the magnetic tape unit 1-5 corresponds to the storage device 1-3 shown in Fig.1A.

The hard disk controller 1-6 controls the magnetic disk unit 1-7 so that a program is read out therefrom. The magnetic disk unit 1-7 corresponds to the program memory 1-1 shown in Fig.1A. The CPU 1-10, which is a part of the controller 1-2 shown in Fig.1A, controls the entire operation of the network management device 1. For example, the CPU 1-10 controls a procedure for transferring this program stored in the magnetic tape unit 1-5 to, for example, the communication device 2 and for determining one of the communication devices to which the transferred program should be transferred. Further, the CPU 1-10 controls a procedure for monitoring communication devices to which the program has been transferred and for determining which communication devices having the transferred program should transfer it to communication devices to which the program has not yet been transferred.

The communication adapter 1-9 controls the communication between the network management device 1 and each of the communication devices 2 - 10. The memory 1-10 functions as a main memory associated with the CPU 1-8, and stores programs for controlling the CPU 1-8 and various information about communication devices to which the program has been transferred, information about communication devices to which the program has not yet been transferred, and information about the connection status of the communication devices 1 - 10. The display device 1-11 displays a variety of information on a display panel. For example, the display device 1-11 displays messages which request the operator to input necessary data, and information about the status of the communication devices 2 - 10. The printer 1-13 prints out necessary information.

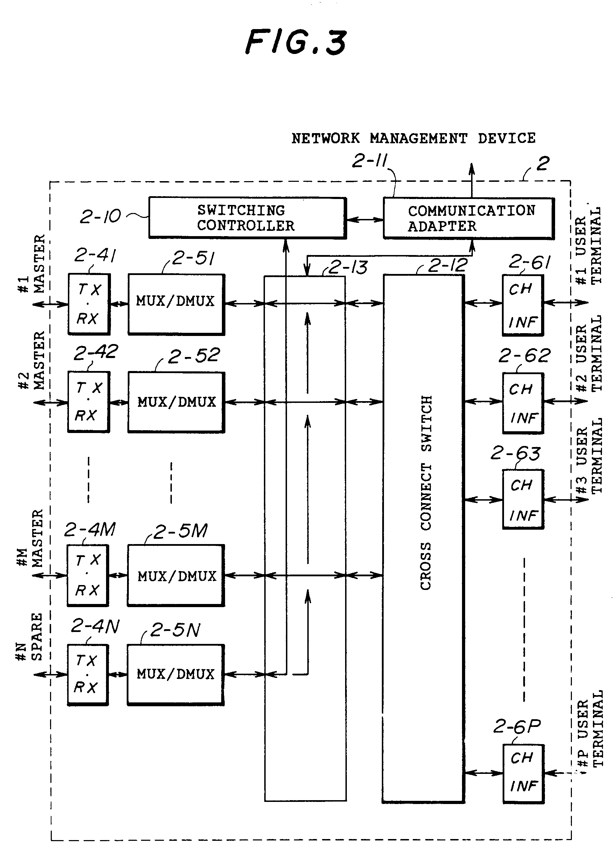

Fig.3 shows the structure of the communication device 2. Each of the other communication devices has the same structure as the communication device 2. As shown in Fig.3, the communication device 2 includes a switching controller 2-10, a communication adapter 2-11, a cross connect switch 2-12, and a protection/software down-load switch 2-13. Further, the communication device 2 includes transmitter (TX)/receiver (RX) 2-14 - 2-4N, multiplexer (MUX)/demultiplexer (DMUX) 2-51 - 2-5N, and channel interface units (CH INF) 2-61 - 2-6N connected to users' terminals.

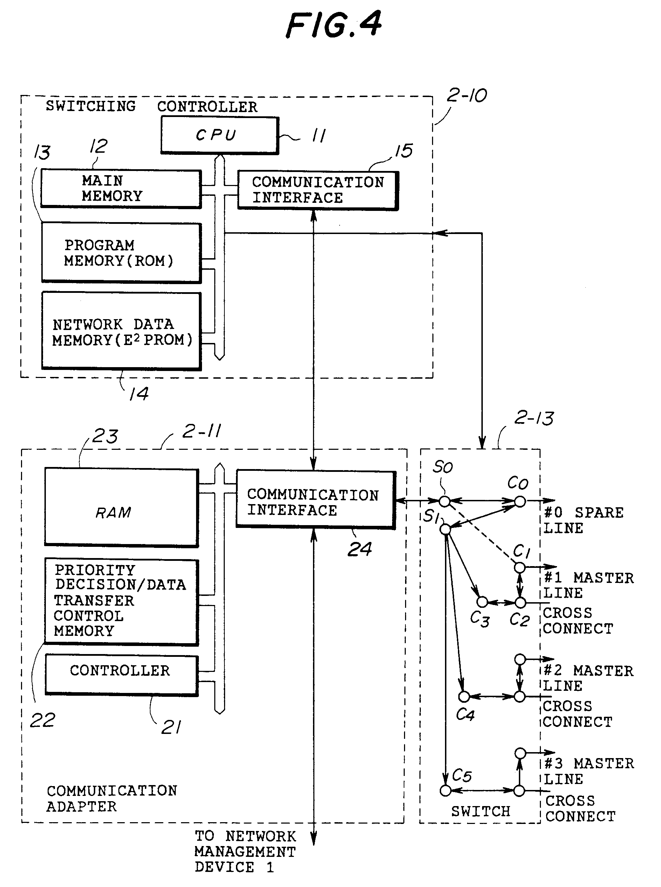

Fig.4 shows the switching controller 2-10, the communication adapter 2-11 and the switch 2-13. The switching controller 2-10 is composed of a CPU 11, a main memory 12, a program memory (ROM) 13, a network data memory formed with an EEPROM 14, and a communication interface unit 15. These structural elements are connected to one another via a bus. The switching controller 2-10 controls a switching procedure for switching the switch 2-13 between the master line L1 and the spare (slave) line L2, and a procedure for transferring, to the communication adapter 2-11, a program which is to be transferred to another communication device. Further, the switching controller 2-10 controls a procedure for storing a program transferred from another communication device in the network data memory 14.

The program memory 13 of the switching controller 2-10 stores programs for controlling the CPU 11, which includes a down-loading program necessary to executing a down-loading control procedure. The network data memory 14 stores a program necessary to the supervisory or management services. When a new function should be added, part of the program or the entire program is rewritten by down loading. The communication adapter 2-11 executes a communication control procedure between the communication device 2 and the network management device 1, and a communication control procedure between the communication device 2 and the other communication devices.

As shown in Fig.3, the communication adapter 2-11 is composed of a controller 21, a priority decision/data transfer control memory 22, a RAM 23 and a communication interface unit 24. The controller 21 controls the communication adapter 2-11, and is formed with a processor. The priority decision/transfer memory 22 stores data showing a priority sequence used when a variety of data, such as a supervisory signal and a control signal, is transferred. The communication interface unit 24 executes a process for communicating with the network management device 1 and the switching controller 2-10. The switch 2-13 includes a switch S0 for use in down loading, and a switch S1 used for making connections with the master line L1 and the spare line L2. In the structure shown in Fig.3, three master lines #1 - #3 and one slave line #0 are used.

If a failure has occurred in the master line #1, the spare line #0 and the spare line #1 are switched to the master line and the spare line, respectively, via contacts C2 and C3, switch S1 and a contact C0. At this time, the switch S0 is connected to a contact C1. In the state shown in Fig.4, the down-loading procedure about the new supervisory control program is carried out via the switch S0 and the contact C0 by using the spare line #0.

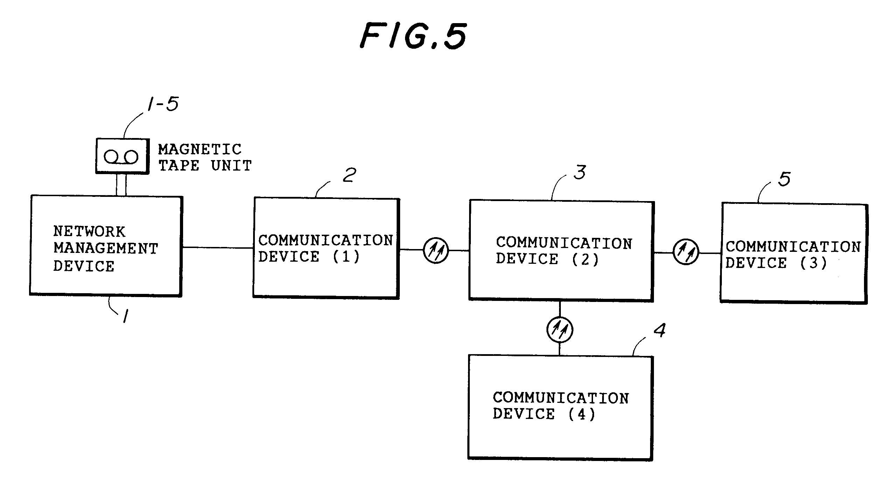

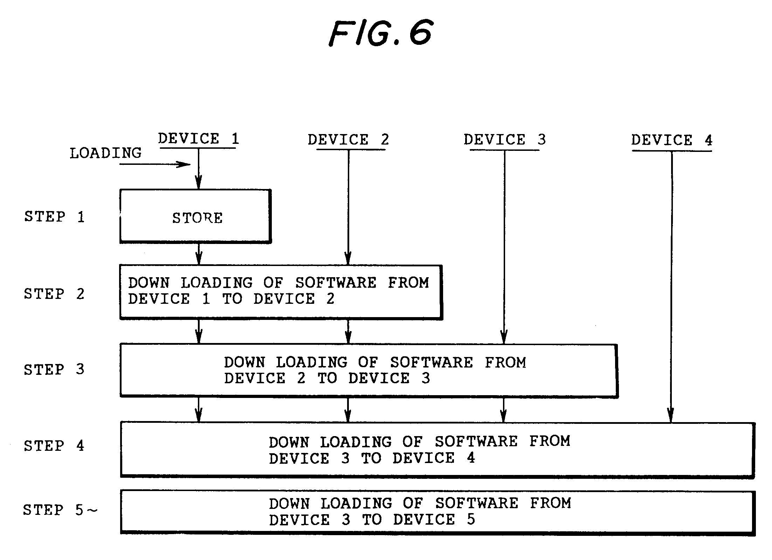

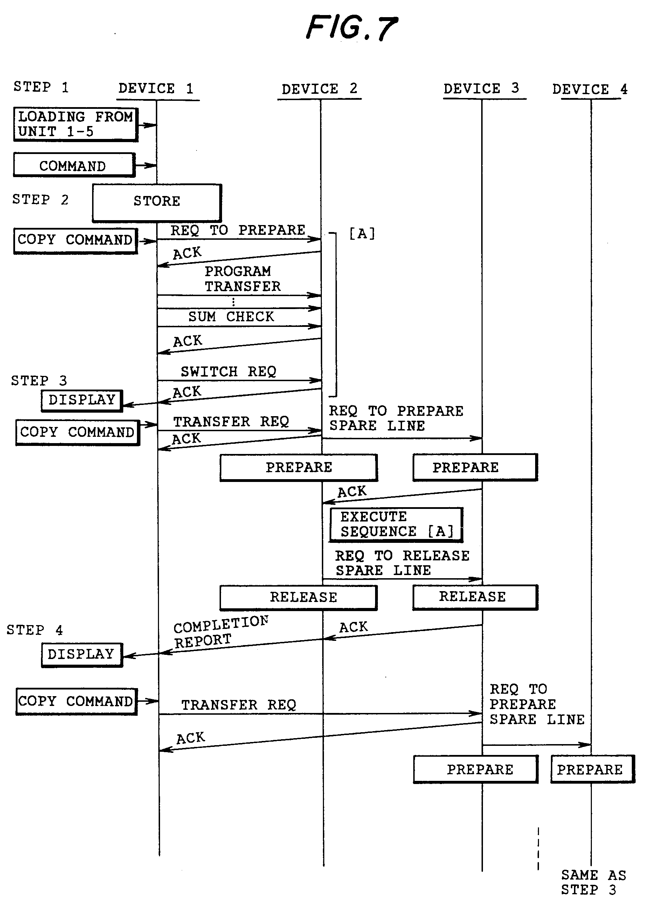

A description will now be given of the operation of the embodiment. It will now be assumed that the network management device 1 and the communication devices 2 - 5 are connected as shown in Fig.5. Fig.6 shows an outline of a procedure for loading a new program, such as a new supervisory control program, in each of the communication devices 2 - 5. Fig.7 is a sequence diagram showing the above down-loading procedure.

The new supervisory control program is stored in the magnetic tape unit 1-5 beforehand (step 1 shown in Fig.6). The operator inputs, by the keyboard 1-2, a command to request to transfer the new supervisory control program to the communication device 2. In response to the command, the CPU 1-8 reads out the new supervisory control program from the magnetic tape unit 1-5 via the magnetic tape controller 1-4, and writes it into the memory 1-10. After this, the CPU 1-8 requests, via the master line, the communication device 2 to prepare to receive data via the spare line. After receiving an acknowledgement signal ACK, the CPU 1-8 reads out the new supervisory control program from the memory 1-10 and sends it to the communication device 2 via the communication adapter 1-9 and a communication line (for example, a dedicated line) between the network management device 1 and the communication device 2 (step 2).

The transferred supervisory control program passes through the communication adapter 2-11 (Fig.3) and is then written into the network data memory 14 of the switching controller 2-10 (Fig.4). After all the data of the supervisory control program has been transferred to the communication device 2, the CPU 1-8 sends a sum check signal to the communication device 2. When the CPU 11 of the switching controller 2-10 of the communication device 2 determines that all the data has been duly received, it generates an acknowledgement signal ACK, which is sent back to the network management device 1. When the CPU 1-8 of the network management device 1 receives the acknowledgement signal from the communication device 2, the CPU 1-9 request the communication device 2 to use the newly loaded supervisory control program. After receiving an acknowledgement signal from the communication device 2, the CPU 1-8 displays a message showing the completion of transfer of the new supervisory control program on the display unit 1-11.

Then the operator inputs, via the keyboard 1-12, a copy command which requests to transfer the transferred supervisory control program written into the network data memory 14 of the communication device 2 to the communication device 3. The copy command is sent to the switching controller 2-10 of the communication device 2 via the communication interface unit 24 (Fig.4). After receiving an acknowledgement signal ACK, the switching controller 2-10 of the communication device 2 controls the switch 2-13 so the spare line is connected to the communication device 3. After an acknowledgement signal ACK is received, the supervisory control program stored in the network data memory 14 of the communication device 2 is read out therefrom and transferred to the communication device via the spare line (step 3). The CPU of the communication device 3 writes the received supervisory control program into the network memory, and sends back the acknowledgement signal to the network management device 1 at the last step of a sequence [A] shown in Fig.7.

Then, the communication device 2 requests the communication device 3 to release the spare line from the busy state. After this, the switches 2-3 and 3-3 are switched so that the spare line is released. Thereafter, an acknowledgement signal ACK is sent back to the communication device 3 from the communication device 2. In response to this acknowledgement signal, the communication device 2 informs the network management device 1 of the completion of down loading. Then, the corresponding message is displayed on the display unit 1-11. After this, the operator inputs a copy command to request to transfer the supervisory control program from the communication device 3 to the communication device 4 (step 4). Similarly, the operator inputs a copy command to request to transfer the supervisory control program from the communication device 3 to the communication device 5 (step 5). In this manner, the new supervisory control program can be loaded in each communication device.

The present invention is not limited to the specifically disclosed embodiments, and variations and modifications may be made without departing from the scope of the present invention.

**Claims**

1. A communication network comprising:
   a network management device (1); and
   a plurality of communication devices (2, 3) connected, via master and spare lines (L1, L2), to each other so that a network composed of the communication devices is formed, information being transferred on the master lines in a normal state, said network management device being connected to at least one of said communication devices,

characterized in that said network management device comprises first means (1-1, 1-2, 1-3) for loading down a predetermined program used in the communication devices in any one of the communication devices,

wherein each of the communication devices comprises:

second means (2-1, 3-1) for storing said predetermined program; and

third means (2-2, 3-2, 2-3, 3-3) for reading out said predetermined program from said second means and for transferring said predetermined program to at least one of the communication devices via at least one of the spare lines.

2. A communication system as claimed in claim 1, characterized in that said network management device comprises fourth means (1-2) for generating a copy command which instructs said third means of each of the communication devices to read out said predetermined program from said second means and transfer said predetermined program to at least one of the communication devices via at least one of the spare lines.

3. A communication system as claimed in claim 1, characterized in that:

each of said communication devices comprises fourth means (2-1, 3-1) for storing an operation system necessary for a basic operation of each of said communication devices; and

said second means is provided separately from said fourth means.

4. A communication system as claimed in claim 1, characterized in that said second means of each of said communication devices comprises a programmable read only memory (14).

5. A communication system as claimed in claim 1, characterized in that:

each of said communication devices comprises fourth means (11) for sending back an acknowledgement signal to said network management device when said predetermined program has been duly received; and

said network management device comprises fifth means (1-11, 1-13) for informing an operator of said acknowledgement signal.

6. A communication system as claimed in claim 1, characterized in that said predetermined program comprises a supervisory program which executes a predetermined supervisory operation about the communication devices.

7. A communication system as claimed in claim 1, characterized in that said network management device is connected to said communication devices via dedicated lines.

8. A method of loading down a predetermined program stored in a network management device (1) in communication devices (2, 3) which are connected via master and spare lines (L1, L2) so that a network composed of the communication devices is formed, information being transferred on the master lines in a normal state in which no error has occurred in the communication devices, characterized in that said method comprises the steps of:

(a) loading said predetermined program stored in the network management device in a first one of the communication devices;

(b) storing said predetermined program in a memory provided in said first one of the communication devices;

(c) reading out said predetermined program from said memory; and

(d) transferring said predetermined program to a second one of the communication devices via one of the spare lines.

9. A method as claimed in claim 8, characterized in that said method comprises the steps of:

(e) storing said predetermined program transferred by said step (d) in a memory provided in said second one of the communication devices;

(f) reading out said predetermined program from said memory of said second one of the communication devices; and

(g) transferring said predetermined program to a third one of the communication devices via one of the spare lines.

10. A method as claimed in claim 8, characterized in that:

said method comprises the step of (e) sending a first acknowledgement signal from said first one of the communication devices to said network management device when said predetermined program has been duly stored in said first one of the communication devices by said step (b); and

said step (c) reads out said predetermined program after said acknowledgement signal is received by said network management device.

# FIG.1A

# FIG.1B

# FIG.2

# FIG.3

NETWORK MANAGEMENT DEVICE

2-11

2

SWITCHING CONTROLLER   2-10

COMMUNICATION ADAPTER

#1 MASTER   2-41   TX·RX   2-51   MUX/DMUX   2-13   2-12   2-61   CH INF   #1 USER TERMINAL

#2 MASTER   2-42   TX·RX   2-52   MUX/DMUX   2-62   CH INF   #2 USER TERMINAL

2-63   CH INF   #3 USER TERMINAL

#M MASTER   2-4M   TX·RX   2-5M   MUX/DMUX

CROSS CONNECT SWITCH

#N SPARE   2-4N   TX·RX   2-5N   MUX/DMUX

2-6P   CH INF   #P USER TERMINAL

EP 0 504 860 A2

# FIG.4

SWITCHING CONTROLLER 2-10

CPU — 11

MAIN MEMORY 12, 13

COMMUNICATION INTERFACE 15

PROGRAM MEMORY(ROM)

NETWORK DATA MEMORY(E² PROM) 14

COMMUNICATION INTERFACE

23 2-11

RAM

PRIORITY DECISION/DATA TRANSFER CONTROL MEMORY

CONTROLLER

22 21

COMMUNICATION ADAPTER

COMMUNICATION INTERFACE 24

2-13

S0 C0

S1

#0 SPARE LINE

C1 #1 MASTER LINE

C3 C2 CROSS CONNECT

C4 #2 MASTER LINE CROSS CONNECT

C5 #3 MASTER LINE CROSS CONNECT

SWITCH

TO NETWORK MANAGEMENT DEVICE 1

10

# FIG.5

# FIG. 6

LOADING →

| | DEVICE 1 | DEVICE 2 | DEVICE 3 | DEVICE 4 |
|---|---|---|---|---|

**STEP 1**
STORE

**STEP 2**
DOWN LOADING OF SOFTWARE FROM DEVICE 1 TO DEVICE 2

**STEP 3**
DOWN LOADING OF SOFTWARE FROM DEVICE 2 TO DEVICE 3

**STEP 4**
DOWN LOADING OF SOFTWARE FROM DEVICE 3 TO DEVICE 4

**STEP 5~**
DOWN LOADING OF SOFTWARE FROM DEVICE 3 TO DEVICE 5

EP 0 504 860 A2

# FIG.7

STEP 1 DEVICE 1 | DEVICE 2 | DEVICE 3 | DEVICE 4

LOADING FROM UNIT 1-5

COMMAND

STEP 2 STORE

COPY COMMAND → REQ TO PREPARE [A]
ACK
PROGRAM TRANSFER
SUM CHECK
ACK

STEP 3 SWITCH REQ
DISPLAY ACK

COPY COMMAND → TRANSFER REQ / REQ TO PREPARE SPARE LINE
ACK

PREPARE PREPARE
ACK

EXECUTE SEQUENCE [A]

REQ TO RELEASE SPARE LINE

RELEASE RELEASE

STEP 4 COMPLETION REPORT ACK
DISPLAY

COPY COMMAND → TRANSFER REQ / REQ TO PREPARE SPARE LINE
ACK

PREPARE PREPARE

SAME AS STEP 3